Europäisches Patentamt

European Patent Office

Office européen des brevets

(11) Veröffentlichungsnummer: **0 130 443**
**B1**

(12) **EUROPÄISCHE PATENTSCHRIFT**

(45) Veröffentlichungstag der Patentschrift :
11.02.87

(51) Int. Cl.⁴ : **H 01 S   3/097**

(21) Anmeldenummer : **84106872.9**

(22) Anmeldetag : **15.06.84**

(54) **Anregungskreis für ein TE-Hochenergielasersystem.**

(30) Priorität : **30.06.83 DE 3323614**

(43) Veröffentlichungstag der Anmeldung :
**09.01.85 Patentblatt 85/02**

(45) Bekanntmachung des Hinweises auf die Patenterteilung : **11.02.87 Patentblatt 87/07**

(84) Benannte Vertragsstaaten :
**AT CH DE FR GB IT LI**

(56) Entgegenhaltungen :
**EP-A- 0 024 576
FR-A- 2 509 905
INSTRUMENTS AND EXPERIMENTAL TECHNIQUES,
Band 24, Nr. 2, März-April 1981, Seiten 486-487,
Plenum Publishing Corporation, New York, US; V.S.
ARAKELYAN et al.: "Compact high peak power nitrogen laser"
REV. SCI. INSTRUM., Band 47, Nr. 1, Januar 1976,
Seiten 92-95, American Institute of Physics, New
York, US; C.P. WANG: "Simple fast-discharge device
for high-power pulsed lasers"**

(73) Patentinhaber : **KRAFTWERK UNION AKTIENGE-
SELLSCHAFT
Wiesenstrasse 35
D-4330 Mülheim (Ruhr) (DE)**

(72) Erfinder : **Cirkel, Hans-Jürgen, Dr., Dipl.-Phys.
Anderlohrstrasse 9
D-8520 Erlangen (DE)**
Erfinder : **Bette, Willi
Pappelgasse 1c
D-8520 Erlangen (DE)**
Erfinder : **Müller, Reinhard
Vogelherd 97
D-8520 Erlangen (DE)**

(74) Vertreter : **Mehl, Ernst, Dipl.-Ing. et al
Postfach 22 01 76
D-8000 München 22 (DE)**

**0 130 443**

### Beschreibung

Die Erfindung bezieht sich auf einen Anregungskreis für ein TE-Hochenergielasersystem, gemäß Oberbegriff des Anspruchs 1.

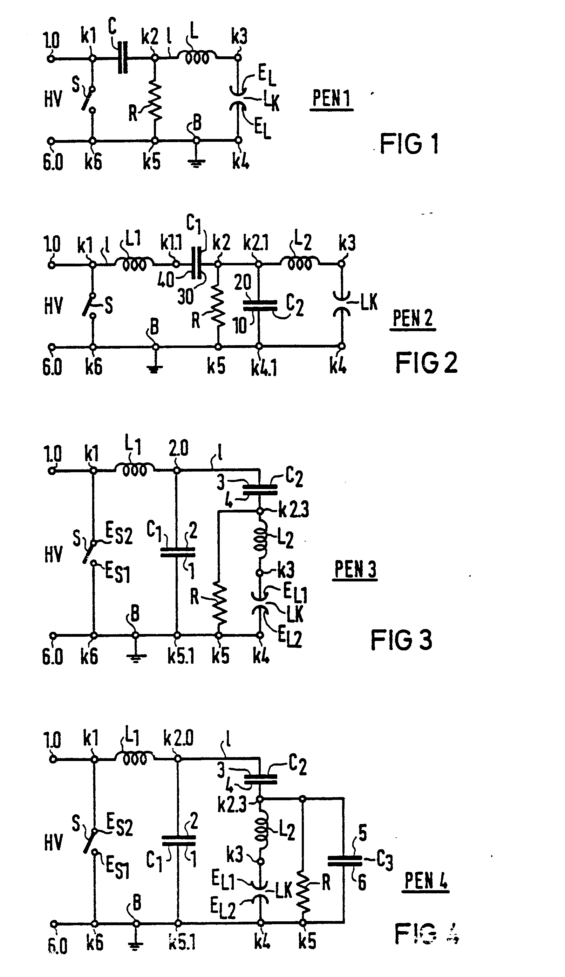

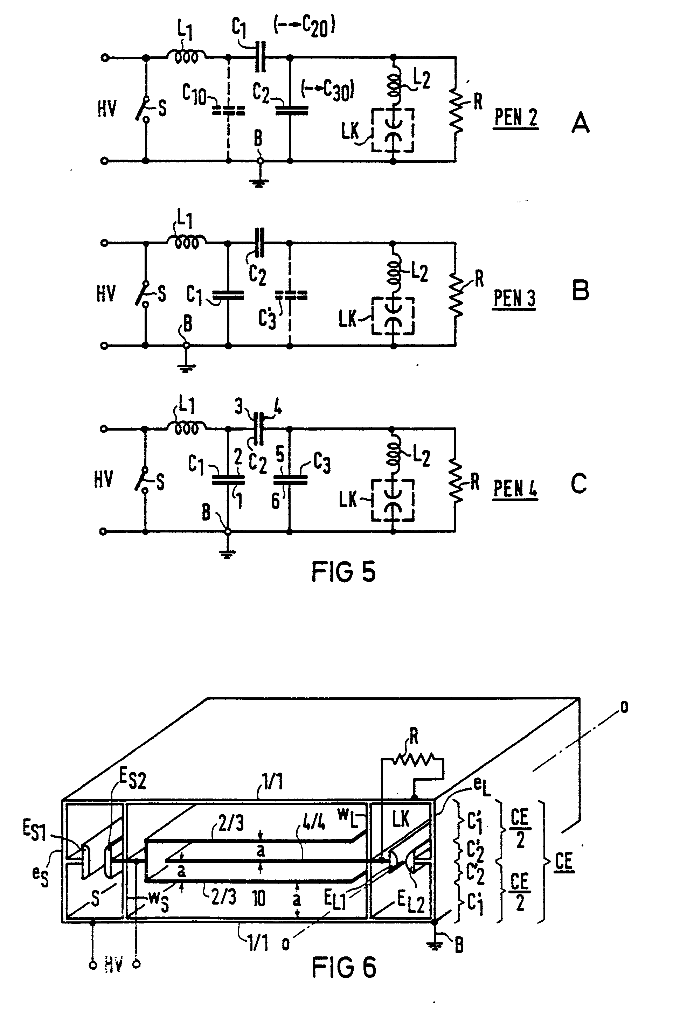

Ein solches Anregungssystem ist durch die DE-A-29 32 781, bzw. EP-A-0 024 576 bis auf das Merkmal bekannt, daß dort in den Schaltbildern der Fig. 1 für die Blümlein-Schaltung und der Fig. 4 für die Charge-Transfer-Schaltung die Ersatzinduktivitäten des Anregungskreises, die im folgenden mit $L_1$ und $L_2$ bezeichnet werden, nicht eingezeichnet sind. Für die vorliegende Erfindung ist aber die Berücksichtigung dieser Ersatzinduktivitäten von wesentlicher Bedeutung.

Zur näheren Erläuterung des Begriffes TE-Laser (TE = transversely excited) — siehe die vorgenannte DE-A-29 32 781. Da diese TE-Laser bzw. TE-Hochenergielaser mit Drucken in der Laserkammer bis zu mehreren bar arbeiten, werden sie in neuerer Zeit bevorzugt als TE-Laser und nicht mehr als TEA-Laser bezeichnet.

Hier wie im folgenden wird vorausgesetzt, daß Hochenergielasersysteme gemäß Gattungsbegriff mit Vorionisierungs-Einrichtungen ausgerüstet sind, wie sie z. B. in der DE-A-30 35 702 (Gleitfunkenentladung) oder der DE-A-30 35 730 (Vorionisierungsstäbe) beschrieben sind ; deswegen erübrigt sich eine Darstellung im Rahmen der vorliegenden Anmeldung.

Verstärktes Interesse gilt den erwähnten Hochenergie- oder Hochleistungs-TE-Lasern besonders deshalb, weil sie für eine Anwendung in der industriellen Produktion geeignet sind. Neben dem Verlangen nach einer hohen mittleren Leistung dieser Lasersysteme tritt daher immer mehr in den Vordergrund die Forderung nach der Wirtschaftlichkeit und der Standzeit.

Zentrale Bedeutung bei der Erfüllung dieser Kriterien kommt der Ausgestaltung des pulserzeugenden Netzwerks (PEN) zur Anregung der Laser zu. Ein solches pulserzeugendes Netzwerk wird in der einschlägigen Literatur auch als pulsformendes Netzwerk (PFN) bezeichnet (abgeleitet von dem englischsprachigen Begriff « pulsforming network »).

Der Wellenwiderstand der Masche des pulserzeugenden Netzwerkes, welche die Last enthält, sollte möglichst gering bei möglichst hoher Stromanstiegsgeschwindigkeit in der Last ausgelegt sein. Mit diesen Maßnahmen, die die Voraussetzung für einen effektiven Laserbetrieb darstellen, wird eine möglichst homogene Anregung des Lasers und eine günstige Anpassung an die Last angestrebt.

Um den elektrischen oder elektronischen Hochspannungs-Schalter des pulserzeugenden Netzwerks bei hoher Zuverlässigkeit mit großer Standzeit betreiben zu können, muß — bei einer vorgegebenen maximalen Spannungsanstiegszeit über der Last — ein möglichst hoher Wellenwiderstand in der Masche des pulserzeugenden Netzwerks, die das Schaltelement enthält, angestrebt werden.

Der Erfindung liegt die Aufgabe zugrunde, einen Anregungskreis für ein TE-Hochenergielasersystem der eingangs genannten Art zu schaffen, das den vorgenannten Anforderungen möglichst weitgehend Rechnung trägt, d. h. insbesondere die folgenden Merkmale aufweist :

— möglichst geringer Wellenwiderstand in der Masche des pulserzeugenden Netzwerkes, die die Laserentladungsstrecke (Last) enthält, bei möglichst hoher Stomanstiegsgeschwindigkeit in der Last ;

— damit möglichst homogene Anregung des Lasers und eine günstige Anpassung an die Last ;

— möglichst schonender Betrieb für den schnellen Hochspannungsschalter bei hoher Zuverlässigkeit und großer Standzeit und zu diesem Zweck insbesondere

— bei vorgegebener maximaler Spannungsanstiegszeit über der Last ein möglichst hoher Wellenwiderstand in der den Hochspannungsschalter (Schaltelement) enthaltenden Masche des pulserzeugenden Netzwerkes.

Erfindungsgemäß wird der gestellte Aufgabenkomplex bei dem Anregungskreis gemäß Gattungsbegriff durch die im Kennzeichen des Anspruchs 1 angegebenen Merkmale in der Hauptsache gelöst. Vorteilhafte Weiterbildungen sind in den Unteransprüchen 2 bis 9 angegeben.

Die mit der Erfindung erzielbaren Vorteile sind im folgenden im Zuge der Figurenbeschreibung näher erläutert und durch eine vergleichende Betrachtung mit bekannten pulserzeugenden Netzwerken hervorgehoben. Dabei wird die Erfindung zunächst anhand einer vergleichenden Analyse mit bekannten pulserzeugenden Netzwerken und anschliessend anhand mehrerer Ausführungsbeispiele, die in der Zeichnung dargestellt sind, noch näher erläutert. Darin zeigt in schematischer, vereinfachter Darstellung :

Figur 1 einen einfachen bekannten Anregungskreis mit Laserkammer, Hochspannungsschalter und dem pulserzeugenden Netzwerk (PEN 1) zur Erzeugung der Hochspannungsimpulse für die Gasentladung zwischen den Laser-Elektroden der Laserkammer ;

Figur 2 einen weiteren bekannten Anregungskreis mit einem pulserzeugenden Netzwerk (PEN 2) in Gestalt einer Charge-Transfer-Schaltung ;

Figur 3 einen weiteren bekannten Anregungskreis mit einem pulserzeugenden Netzwerk (PEN 3) in Gestalt der LC-Inversions-Schaltung, auch als Blümlein-Schaltung bezeichnet ;

Figur 4 einen erfindungsgemäß ausgebildeten Anregungskreis mit einem pulserzeugenden Netzwerk (PEN 4), welches man als Inversions-Charge-Transfer-Schaltung bezeichnen könnte ;

Figur 5 in ihrem Teil A eine Charge-Transfer-Schaltung, in ihrem Teil B eine Blümlein-Schaltung und in ihrem Teil C eine Inversions-Charge-Transfer-Schaltung nach der Erfindung, wobei in dem Figurenteil A und B gestrichelt angedeutet ist, wo der dritte Kondensator- bzw. Bandleiterkondensator in

2

die Schaltung eingefügt werden muß, um zur Schaltung nach Fig. 5C zu gelangen ;

Figur 6 eine sogenannte ebene Anordnung für den Anregungskreis nach Fig. 3, d. h. Laserkammer, Hochspannungsschalter und Beläge oder Platten der Bandleiterkondensatoren, sowie eine parallel zur Laserentladungsstrecke geschaltete Impedanz R, mechanisch und elektrisch zu einer kastenförmigen Baueinheit verbunden, wobei CE den gesamten ebenen Kondensatorstapel bezeichnet und CE/2 die Hälfte desselben, der jedoch noch funktionsfähig ist, d. h. jeden Belag 1/1, 2/3 und 4/4 einmal enthält ;

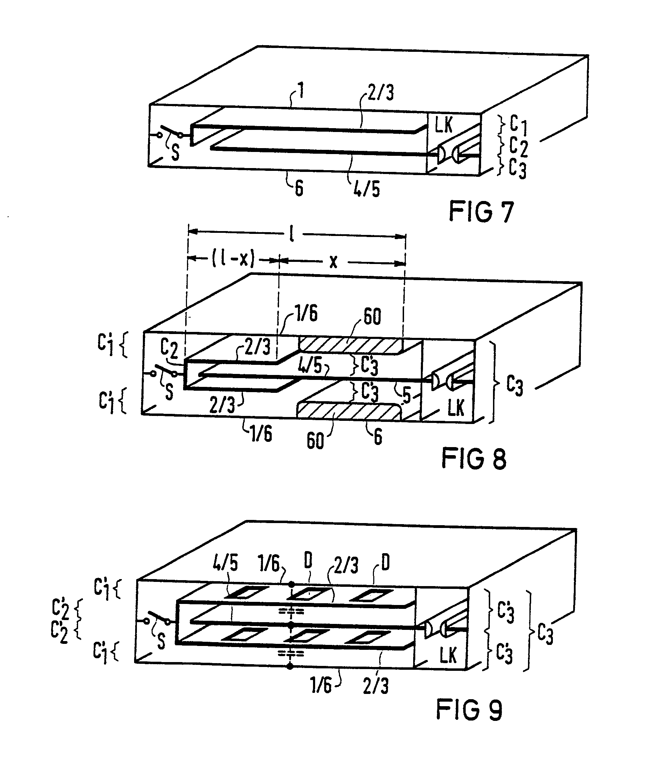

Figur 7 einen grundsätzliche Änderung der sogenannten ebenen Anordnung nach Fig. 6, welche zu einer ersten räumlichen Verwirklichung des Anregungskreises nach der Erfindung führt, wobei im Vergleich zur Gesamtanordnung CE nach Fig. 6 der untere Bandleiterkondensator-Belag 2/3 weggelassen ist bzw. im Vergleich zur oberen Hälfte CE/2 nach Fig. 6 der untere Belag 6 hinzugekommen ist ;

Figur 8 einen zweites Ausführungsbeispiel für die Transposition des Anregungskreises nach der Erfindung in einer sogenannten ebenen Anordnung, wobei im Vergleich zu Fig. 6 die Beläge 2/3 verkürzt sind und die hierdurch zwischen den Teilbelägen 5 und 6 der Beläge 4/5 und 1/6 sich ausbildenden Teilkapazitäten $C_3$ in ihrer Belagdicke zwecks Plattenabstandsverringerung vergrößert sein können ;

Figur 9 eine dritte Transpositionsvariante nach der Erfindung, bei der im Vergleich zu Fig. 6 die Beläge oder Platten 2/3 mit Durchbrüchen in Form von Bohrungen, Aussparungen oder Schlitzen versehen sind, durch welche die Feldlinien zwischen den Teilbelägen 5 und 6 zwischen den Belägen 4/5 und 1/6 hindurchgreifen können ;

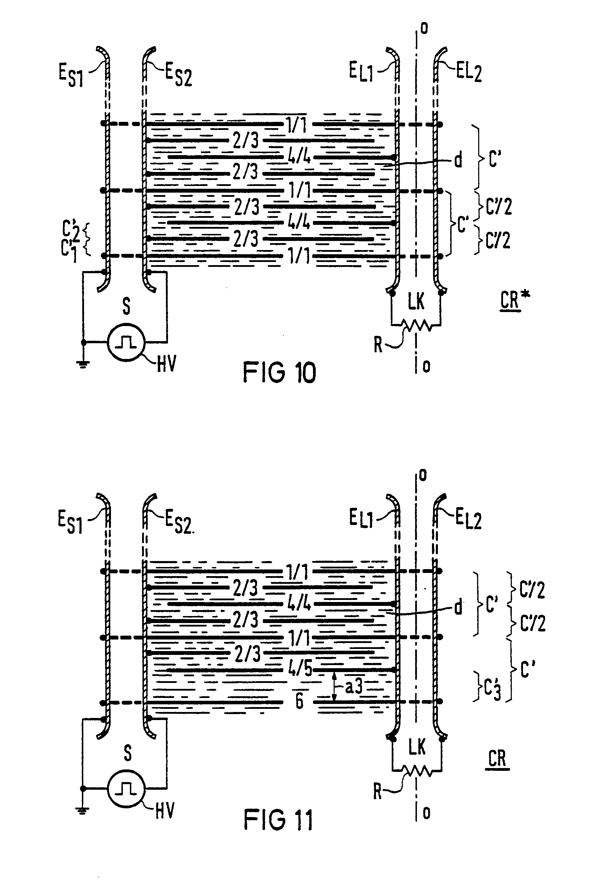

Figur 10 eine dreidimensionale Anordnung eines Anregungskreises mit integriertem pulserzeugenden Netzwerk in Gestalt einer Blümlein-Schaltung, wie sie aus Fig. 11 der DE-A-29 32 781 hervorgeht ;

Figur 11 eine grundsätzliche Änderung der Anordnung nach Fig. 10, die zu einer vierten Transpositionsvariant eines Anregungskreises nach der Erfindung führt, wobei dritte Teilkapazitäten $C'_3$ und ihre Teilbeläge 5, 6 entsprechend Fig. 6 durch Weglassen von Kondensatorbelägen 2/3 entstanden gedacht werden können ;

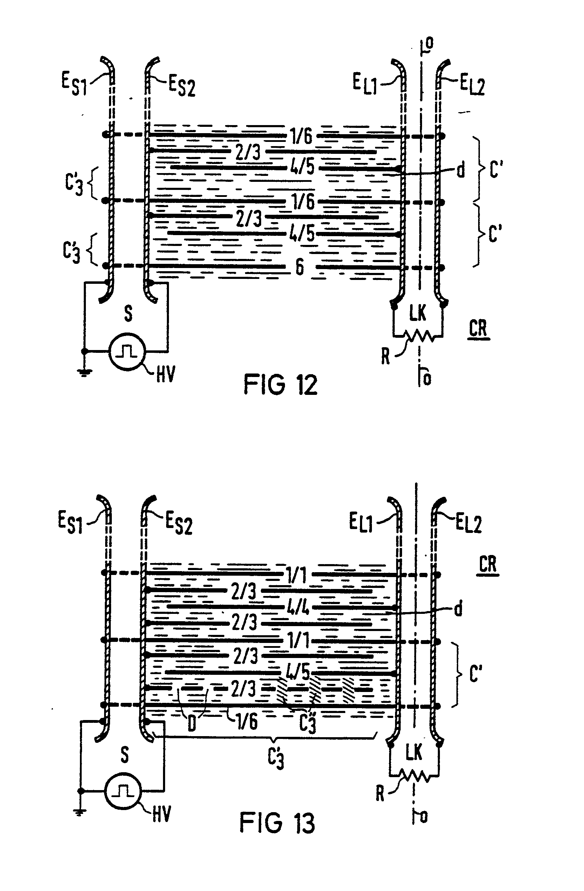

Figur 12 ein fünftes Ausführungsbeispiel einer Transposition, bei welchem im Vergleich zur Anordnung nach Fig. 11 nicht nur auf einer Teillänge, sondern über die gesamte Stapellänge des Kondensatorpaketes CR in zylklischer Folge ein Teil der Kondensatorbeläge 2/3 weggelassen ist ;

Figur 13 entsprechend zu Fig. 9 eine sechste Transpositionsvariante zur Einfügung einer dritten Teilkapazität $C'_3$ in mindestens einen Teilstapel des Kondensatorpaketes CR, und zwar mittels definierter Durchbrüche ;

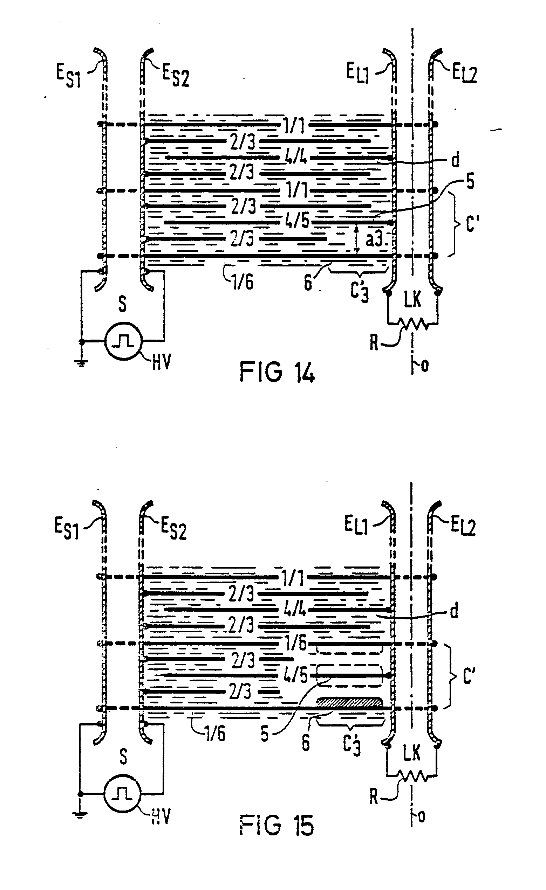

Figur 14 in entsprechender Darstellung zu Fig. 13 eine siebte Möglichkeit zur Realisierung der dritten Teilkapazität und zwar mittels Belagverkürzung und

Figur 15 entsprechend zu Fig. 8 und anknüpfend an das Ausführungsbeispiel nach Fig. 14 eine weitere Maßnahme zur Kapazitätserhöhung der dritten Teilkapazität mittels Abstandsverringerung bzw. Belagverdickung in einem Teilbereich bei einer dreidimensionalen Anordnung des Anregungskreises.

Für das pulserzeugende Netzwerk werden heute im wesentlichen drei Schaltungstypen eingesetzt.

Die einfache Variante PEN 1 zeigt Fig. 1, vergleiche DE-A-20 42 615. Der zwischen den Klemmen 1.0, 6.0 der Hochspannungsversorgung HV angeschlossene Schalter S liegt dabei parallel zur Reihen-Parallel-Schaltung, aus dem Kondensator C einerseits und der Parallelschaltung, bestehend aus R parallel zur Reihenschaltung L-LK, andererseits. Die Hochspannungsversorgung HV lädt über die Impedanz R den Kondensator C auf.

Mit LK ist die Laserkammer bzw. Entladungsstrecke eines TE-Hochenergielasersystems bezeichnet, mit den beiden zueinander beabstandeten Laser-Elektroden $E_L$, deren Entladungsstrecke in Reihe mit der Ersatzinduktivität L und dem Kondensator C geschaltet ist. Die Impedanz R liegt parallel zur Reihenschaltung aus L und LK. Die Knotenpunktpaare der Schaltungselemente C, L, LK, R und S sind mit k1-k2 ; k2-k3 ; k3-k4 ; k2-k5 und k1-k6 bezeichnet, die verbindenden Leitungen generell mit 1. B ist das Massepotential bzw. der zugehörige Knotenpunkt. Hier wie im folgenden gilt, daß die Ersatz- oder Streuinduktivitäten des besseren Verständnisses wegen als diskrete, konzentrierte Schaltelemente dargestellt sind, obwohl sie in Wirklichkeit als Induktivitätsbeläge an der Laserkammer LK, den Kondensatoren C, am Schalter S und über die Zuleitungen verteilt zu denken sind. Die Streukapazitäten dagegen sind von untergeordneter Bedeutung und deshalb nicht dargestellt.

Durch Schließen des Schalters S wird der Kondensator an die Entladungsstrecke LK über die Induktivität L gelegt. Die Entladungsstrecke LK und der Schalter S sind somit hintereinandergeschaltet. Daher muß der gesamte Entladungsstrom über den Schalter fließen ; das Einfügen des Schalters erhöht die Gesamtinduktivität des Entladungskreises um die Schalterinduktivität, die zumindest in derselben Größenordnung liegt, wie die der Entladungsstrecke. Bei dieser Schaltung kann maximal die Ladespannung des Kondensators an der Entladungsstrecke auftreten. Aus dieser Art der Schaltung ergeben sich einige schwerwiegende Nachteile ; insbesondere, wenn die Entladungsstrecke Excimer-Laser pumpen soll.

Die erhöhte Eigeninduktivität des Entladungskreises verschlechtert nicht unbeträchtlich die Effizienz der Anregung. Zum anderen beansprucht diese Schaltung im höchsten Maße das Schaltelement, da der gesamte Entladungsstrom über den Schalter fließen muß. Weiterhin benötigt diese Schaltung — soll sie zur Anregung von Hochenergielasern eingesetzt werden — relativ hohe Spannungen, deren Beherrschung mit außerordentlichen technischen Schwierigkeiten verknüpft ist.

Weit verbreitet ist die in Fig. 2 dargestellte Charge-Transfer-Schaltung PEN 2, vergleiche Andrews,

3

Kearsly, Webb, « Opt. Commun. 20 » (1977), 265-268). Die Hochspannungsquelle HV lädt über die Impedanz R den Kondensator $C_1$. Bei Schließen des Schalters S wird über die Induktivität $L_1$ der Kondensator $C_2$ aufgeladen. Der Kondensator $C_2$ entlädt sich über die Induktivität $L_2$ in die Entladungsstrecke nach deren Zündung. Diese Schaltung bietet den Vorteil, daß der Schalter S und die Entladungsstrecke LK in verschiedenen Maschen des pulserzeugenden Netzwerks liegen, $L_2$ ebenso wie $L_1$ ist eine Ersatzinduktivität, gleiche bzw. sinngemäß gleiche Schaltungselemente und Knotenpunkte zu Fig. 1 tragen die gleichen Bezugszeichen. Die Knotenpuktpaare der Schaltungselemente $L_1$, $C_1$, $L_2$, R, $C_2$ sind mit k1-k1.1, k1.1-k2, k2.1-k3, k2-k5 und k2.1-k4.1 bezeichnet. Man erkennt, daß die Reihenschaltung $L_2$-LK parallel zu $C_2$ und parallel zu R liegt, und diese Reihen-Parallel-Schaltung ist in Reihe zur Reihenschaltung aus $L_1$, $C_1$ an 1.0 angeschlossen. Die Beläge des zweiten, zu LK parallel geschalteten Bandleiterkondensators $C_2$ sind mit 10 und 20 bezeichnet, diejenigen des ersten Bandleiterkondensators $C_1$ mit 30 und 40.

Um die gesamte im Kondensator $C_1$ gespeicherte Energie nach $C_2$ transferieren zu können, d. h. um einen möglichst günstigen elektrischen Wirkungsgrad zu erreichen, muß $C_1$ gleich $C_2$ gewählt werden. Aus der Reihenschaltung von $C_1$ und $C_2$ und der Induktivität $L_1$, die durch die maximal zulässige Spannungsanstiegszeit über den Elektroden der Entladungsstrecke bestimmt wird, ist die Stromanstiegsgeschwindigkeit für den Schalter vorgegeben. Da bei dieser Variante der Schaltung nur maximal die Ladespannung an der Entladungsstrecke anliegen kann, muß bei vergleichbar hohen Spannungen wie bei dem zuerst beschriebenen Schaltungstyp gearbeitet werden. Aus dieser Forderung leiten sich die hohen Spitzenstromstärken für das Schaltelement ab, die jedoch beträchtlich unter denen der ersten Schaltung liegen können.

Den Vorteil niedriger Ladespannung, die wesentliche technische Vereinfachungen ermöglicht, bietet die in Fig. 3 skizzierte LC-Inversions- oder auch Blümlein-Schaltung PEN 3, vergleiche Shipmann « Appl. Phys. Lett. 10 » (1967), 3-4.

Von der Hochspannungsquelle HV werden der Kondensator $C_1$ und über die Impedanz R der Kondensator $C_2$ aufgeladen. Nach Schlibeßen des Schalters S lädt sich der Kondensator $C_1$ auf die entgegengesetzte Polarität um, und an der Entladungsstrecke LK kann maximal die doppelte Ladespannung der Kondensatoren anliegen. Die Reihenschaltung aus den Kondensatoren $C_1$ und $C_2$ speist über die Ersatz-Induktivität $L_2$ die Entladung, die zwischen den Elektroden der Entladungsstrecke brennt. Die Knotenpunktpaare der Schaltungselemente $L_1$, $C_1$, $C_2$, $L_2$, R sind mit k1-k2.0, k2.0-k5.1, k2.0-k2.3, k2.3-k3 und k2.3 k5 bezeichnet. $C_2$ bedeutet ebenso wie in Fig. 2 den der Laserkammer LK zugeordneten Kondensator, $C_1$ den auf der Seite des Schalters S liegenden Kondensator, die Beläge der beiden Bandleiterkondensatoren $C_1$, $C_2$ sind mit 1, 2 bzw. 3, 4 bezeichnet.

Die Spitzenstromstärke des Schaltelementes S in der symmetrischen LC-Inversions-Schaltung nach Fig. 3 — d. h. $C_1 = C_2$ — ist bei gleicher Spannungsanstiegszeit über den Elektroden der Entladungsstrecke und bei gleichem Energieinhalt des pulserzeugenden Netzwerks doppelt so hoch wie bei der Charge-Transfer-Schaltung nach Fig. 2.

Dagegen muß bei der Charge-Transfer-Schaltung PEN 2 verglichen mit der symmetrischen Blümlein-Schaltung PEN 3 das Schaltelement die doppelte Spannung sicher sperren können. Ebenso müssen alle weiteren Bauelemente, wie Spannungsversorgung und Kondensatoren, für die doppelte Spannung ausgelegt sein.

Da die Blümlein-Schaltung nach Fig. 3 bei einer vergleichbar geringen Ladespannung arbeitet, ist sie besonders für die Anregung von Hochenergielasern geeignet, bei denen — um großflächige Entladungsquerschnitte zu pumpen — hohe Spannungen über den Elektroden $E_L$ erforderlich sind.

Hohe Anforderungen stellt der Hochenergielaser LK an das Schaltelement. Um die kritischen Werte für Stromanstiegsgeschwindigkeit und Spitzenstromstärke zu reduzieren, wird für diese Laser als pulserzeugendes Netzwerk die unsymmetrische Blümlein-Schaltung, d. h. $C_1 < C_2$, eingesetzt.

Sinnvollerweiser sollte $C_1$ nicht kleiner als 0,5 $C_2$ gewählt werden, da bei noch stärkerer Unsymmetrie der Wellenwiderstand des Anregungskreises für die Entladungsstrecke zu sehr anwächst und damit eine effektive Energieeinkopplung in das Entladungsvolumen beeinträchtigt. Die unsymmetrische Blümlein-Schaltung reduziert die Strombelastung des Schaltelements nahezu auf Werte, wie sie bei der Charge-Transfer-Schaltung erreicht werden können. Der Vorteil der Spannungsüberhöhung bleibt jedoch bestehen. Um die Standzeit des Schaltelements zu verlängern, sollten die Anforderungen weiter verringert werden können. Die zu treffenden Maßnahmen sollten allerdings nicht zu einer Verminderung der Anregungseffektivität des pulserzeugenden Netzwerks führen, insbedondere sollte der Wellenwinderstand des Anregungskreises bei vorgegebenem Energieinhalt und vorgegebener Spannung des pulserzeugenden Netzwerks nicht erhöht werden.

Diese Aufgabe löst die in Fig. 4 schematisch dargestellte Schaltung eines Anregungskreises mit dem pulserzeugenden Netzwerk PEN 4. Sie baut auf der in Fig. 5 beschriebenen LC-Inversions- bzw. Blümlein-Schaltung auf. Zusätzlich wird über die Entladungsstrecke LK ein weitere Kondensator $C_3$ geschaltet. Vorteilhafterweise sind dabei Eigen- und Anschlußinduktivität der Reihenschaltung aus den Kondensatoren $C_1$ und $C_2$ einerseits und diejenige des dazu parallel geschalteten dritten Bandleiterkondensators $C_3$ andererseits jeweils klein, vorzugsweise um etwa eine Größenordnung kleiner, gegenüber der Ersatzinduktivität $L_2$ des die Laserkammer LK enthaltenden Anregungszweiges k2.3-k4. $C_3$ ist an die Knotenpunkte k2.3 mit einem Pol und k4 bzw. k5 mit dem anderen Pol angeschlossen, seine Beläge sind mit 5 bzw. 6 bezeichnet.

Die in Fig. 4 beschriebene Schaltung vereinigt in sich sowohl Elemente der LC-Inversions-Schaltung wie auch Eigenschaften der Charge-Transfer-Schaltung und kann daher als Inversions-Charge-Transfer-Schaltung gekennzeichnet werden (abgekürzt : ICT-Schaltung).

Durch die Hochspannungsversorgung HV werden der Kondensator $C_1$ und über die Impedanz R der Kondensator $C_2$ auf die Ladespannung aufgeladen. Der Kondensator $C_3$ bleibt nahezu auf Erdpotential. Nach Schließen des Schalters S wird der Kondensator $C_1$ umgeladen. Durch diesen Vorgang baut sich eine Spannung über der Entladungsstrecke LK auf und der Kondensator $C_3$ wird aufgeladen, bis die Entladungsstrecke LK gezündet ist.

Der aus den Kondensatoren $C_1$, $C_2$ und der Ersatz-Induktivität $L_2$ gebildete Serienkreis und zusätzlich der parallele Stromkreis, den $C_3$ und $L_2$ aufbauen, speisen die Entladungsstrecke LK.

Durch geschickte Wahl der Kapazitäten $C_i$ ($i = 1, 2, 3$) lassen sich pulserzeugende Netzwerke PEN 4 zusammenstellen, die unterschiedlichen Anforderungen genügen. Ohne Verlust von Anregungseffektivität d. h. bei ungefähr gleicher eingekoppelter Leistung in die Entladungsstrecke LK, wie bei der symmetrischen Blümlein-Schaltung PEN 3 — läßt sich ein besonders schonender Betrieb für das Schaltelement S erreichen. Bei gleicher Spannungsanstiegszeit über der Entladungsstrecke LK werden für

$$2 < \frac{C_2}{C_1} < 3 \quad \text{und} \quad C_3 \approx \frac{C_1 . C_2}{C_1 + C_2}$$

die Anforderungen an das Schaltelement S gegenüber der symmetrischen Blümlein-Schaltung, nahezu halbiert. Bei Inkaufnahme einer geringen Einbuße an in die Entladungsstrecke eingekoppelter Leistung lassen sich bei

$$C_1 \leqslant \frac{C_2}{4}$$

die Werte von kritischen Daten des Schaltelements S bei konstanter gespeicherter Energie, konstanter Ladespannung des pulserzeugenden Netzwerks PEN 4 und konstanter Spannungsanstiegszeit über der Entladungsstrecke noch weiter reduzieren.

Bei dieser Wahl der Kapazitätsverhältnisse $C_i$ liegt die über der Entladungsstrecke LK erreichbare Spannung unter der der Blümlein-Schaltung, jedoch über der der Charge-Transfer-Schaltung. Bei Einsatz der Inversions-Charge-Transfer-Schaltung lassen sich Entladungsbedingungen einstellen, bei denen in einer anderen Parameterkombination der Kapazitäten $C_i$ sich die in die Entladungsstrecke LK eingekoppelte Leistung erhöht gegenüber der der LC-Inversions-Schaltung nach Fig. 3.

Für

$$1,5 < \frac{C_2}{C_1} < 2$$

und

$$C_3 \leqslant 0,5 \cdot \frac{C_1 . C_2}{C_1 + C_2}$$

steigt die in die Entladungsstrecke LK eingekoppelte Leistung, und die Spannung über der Entladungsstrecke erreicht nahezu die doppelte Ladespannung, während sich die Anforderungen an das Schaltelement S gegenüber der symmetrischen Blümlein-Schaltung mit $C_1 = C_2$ reduzieren.

Die schematische Darstellung nach Fig. 5 A, B, C zeigt, daß man die ICT-Schaltung bzw. den ICT-Anregungskreis nach der Erfindung (Fig. 5C) sowohl durch Modifikation einer Blümlein-Schaltung (Fig. 5B) als auch durch Modifikation einer Charge-Transfer-Schaltung (Fig. 5A) erhalten kann. Fig. 5B zeigt das, was anhand der Fig. 4 bereits erläutert wurde, nämlich die Einfügung eines dritten Bandleiterkondensators $C'_3$ in Parallelschaltung zur Entladungsstrecke der Laserkammer LK und zu einer mit dieser in Reihe liegenden Ersatzinduktivität $L_2$, so daß dadurch der Anregungskreis nach der Erfindung (Fig. 5C) entsteht. Ein solcher Anregungskreis entsteht jedoch auch, wenn die Charge-Transfer-Schaltung bzw. das entsprechende pulserzeugende Netzwerk PEN 2 nach Fig. 5A ergänzt wird durch einen zusätzlichen dritten Bandleiterkondensator $C_{10}$ (der ebenfalls wie die Kapazität $C'_3$ in Fig. 5B gestrichelt dargestellt ist). In Fig. 5A ist in Klammern angedeutet, daß der ursprünglich erste Bandleiterkondensator $C_1$ dann zum zweiten Bandleiterkondensator $C_{20}$ wird und der zweite Bandleiterkondensator $C_2$ zum dritten Bandleiterkondensator $C_{30}$, wie eine vergleichende Betrachtung mit Fig. 5C zeigt.

Die beschriebene ICT-Schaltung nach Fig. 4 und 5C läßt sich in die gebräuchlichen, technisch realisierten Anregungskreise bzw. pulserzeugenden Netzwerke integrieren. Dabei handelt es sich zum einen um sogenannte ebene Anordnungen nach Fig. 6, die deshalb so genannt werden, weil die optische Achse o-o der Laserkammer LK und die Erstreckung der Laser-Elektroden $E_{L1}$, $E_{L2}$ in einer Ebene der Beläge 1/1, 2/3, 4/4 der Bandleiterkondensatoren $C_1$, $C_2$ liegen oder planparallel zu einer solchen Belagebene verlaufen. Einer solchen sogenannten ebenen Anordnung sind hinsichtlich der Anzahl der übereinander angeordneten Kondensatorbeläge von vornherein Grenzen gesetzt, weil sich mit zunehmender Belaganzahl aufgrund verlängerter Strompfade und vergrößerter Stromschleifen eine nicht mehr tolerierbare Induktivitätserhöhung der Gesamtanordnung ergibt.

Dieses Problem tritt bei der dreidimensionalen Anordnung, die im Prinzip in Fig. 10 dargestellt ist und in welche sich die ICT-Schaltung der Erfindung genauso gut integrieren läßt wie in eine sogenannte ebene Anordnung, nicht auf. Auf die dreidimensionale Anordnung wird später eingegangen ; zunächst zur sogenannten ebenen·Anordnung.

In Fig. 6 ist perspektivisch eine bevorzugte sogenannte ebene Anordnung dargestellt, die als Ganzes mit CE bezeichnet ist und eine Transposition der Blümlein-Schaltung nach Fig. 3 in einer räumlichen Anordnung dargestellt. Man erkennt im rechten Teil die Laserkammer LK mit den beiden Laser-Elektroden $E_{L1}$ und $E_{L2}$, welche sich jeweils parallel zur optischen Achse o-o, der Emissionsrichtung des Lasers, erstrecken und bevorzugt einen in dieser Richtung ausgedehnten Vollquerschnitt aufweisen, welcher sich aus einem pilzhutartigen Elektrodenteil und einem pilzstielartigen Stromzuführungsteil zusammensetzt. Die Laserkammer LK ist mit einem geeigneten Lasergas gefüllt, welches mittels longitudinaler und/oder transversaler Gasströmung regeneriert bzw. ausgetauscht werden kann (der Gaskreislauf ist nicht dargestellt). Ebenso sind geeignete Vorionisierungsvorrichtungen, wie sie z. B. aus DE-A- 30 35 702 und DE-A-30 35 730 hervorgehen, nicht dargestellt, da ihre Darstellung zum Verständnis der Erfindung nicht erforderlich ist. An der anderen Längsseite der kastenförmigen Anordnung CE befindet · sich mindestens ein schneller Hochspannungsschater S, durch dessen Aktivierung bzw. Zündung über das pulserzeugende Netzwerk PEN 3 (siehe Fig. 3) die Hochspannungsimpulse an den Laser-Elektroden $E_{L1}$, $E_{L2}$ erzeugbar sind. Der Hochspannungsschalter S ist im dargestellten Fall der Fig. 6 eine Funkenstrecke mit gleichfalls achsparallel zur optischen Achse o-o ausgedehnten Elektroden $E_{S1}$, $E_{S2}$, welche mit Überschlagabstand einander gegenüberstehen. Anstelle einer Funkenstrecke könnten auch elektronische Schalter verwendet sein, z. B. Thyratrons, wie in DE-A-29 32 781 im einzelnen erläutert. Die Beläge 1 bis 4 der ersten und zweiten Bandleiterkondensatoren $C_1$, $C_2$ aus Fig. 3 sind in Fig. 6 mit 1/1, 2/3 und 4/4 bezeichnet, weil es sich in Fig. 6 bevorzugt um eine kompakte Anordnung mit flüssigem Dielektrikum handelt, bei welcher die Beläge als Kondensatorplatten ausgebildet sind. Die Abstände zwischen den einzelnen Platten sind generell mit a bezeichnet ; der Raum 10, der von den Platten und dem flüssigen Dielektrikum ausgefüllt ist,. ist gegenüber der Laserkammer LK durch die laserseitige isolierende Trennwand $w_L$ und zum Raum des Schalters S durch die schalterseitige isolierende Trennwand $w_S$ abgetrennt. Diese Trennwände $w_L$ und $w_S$ sind von der Laser-Elektrode $E_{L1}$ bzw. der Schalterelektrode $E_{S2}$ gasdicht durchdrungen und dienen zugleich als hochspannungsfeste Halterung für diese Elektroden, deren gegenüberliegende Elektroden $E_{L2}$ der Laserkammer und $E_{S1}$ des Schalters S an das Erdpotential B über die obere und untere Erdplatte 1/1 und die vertikalen metallischen Wandteile $e_S$ auf der Schalterseite und $e_L$ auf der Laserseite angeschlossen sind, wobei die letztgenannten, in Fig. 6 vertikal verlaufenden Wandteile der Halterung der Elektroden $E_{L2}$ bzw. $E_{S1}$, der Stromrückführung und dem Abschluß des metallischen, zugleich als Abschirmung wirkenden Gehäusemantels 1/1 — $e_L$ — 1/1 — $e_S$ dienen. Die parallel zur Laserentladungsstrecke unter Berücksichtigung einer etwaigen Ersatzinduktivität $L_2$ liegende Impedanz R ist an die Laser-Elektrode $E_{L1}$ einerseits und an die Erdplatte 1/1 andererseits angeschlossen (vgl. Fig. 3), die Hochspannung HV wird zwischen 1/1 einerseits und der Schalterelektrode $E_{S2}$ andererseits angelegt.

Die Anordnung nach Fig. 6 ist angenähert symmetrisch, wodurch ein besonders kompakter und nach außen total abgeschirmter Aufbau erzielbar ist ; die Gesamtanordnung CE besteht demgemäß aus den beiden Teilanordnungen CE/2, die wiederum je einen ersten und einen zweiten Teilkondensator $C'_1$ und $C'_2$ aufweisen, wobei $C'_1$ von den einander gegenüberstehenden Platten 1/1 und 2/3 gebildet wird und der Teilkondensator $C'_2$ von den einander gegenüberstehenden Platten 2/3 und 4/4. Man erkennt, daß die Platten 2/3 und 4/4 doppelt wirkend bzw. zweifach ausgenutzt sind.

Ausgehend von Fig. 6 gelangt man zu einer ersten Transpositions-Variante nach Fig. 7 zur Bildung oder Integration des dritten Bandleiterkondensators $C_3$, wenn man eine der beiden Platten 2/3 nach Fig. 6, im vorliegenden Fall die untere, wegläßt, so daß sich im Weglassungsbereich die Beläge 4/5 und 6 einander direkt gegenüberliegen. Dabei hat sich die Bezichnung der unteren Erdplatte 1/1 in 6 geändert und die Bezeichnung der mittleren Platte 4/4 in 4/5 geändert, um damit zum Ausdruck zu bringen, daß die beiden Beläge 5, 6 des dritten Bandleiterkondensators der ICT-Schaltung nach Fig. 4 bzw. Fig. 5C durch die Transposition entstanden sind. Die Bezeichnung 4/5 soll ausdrücken, daß diese Platten bzw. dieser Belag ein doppelt wirkender Belag ist, weil er sowohl zum dritten Bandleiterkondensator $C_3$ mit den Belägen 5, 6 als auch zum zweiten Bandleiterkondensator $C_2$ mit den Belägen 2/3 und 4 gehört. Die durchgeführte Transposition in die Anordnung nach Fig. 7 ist auch zu verwirklichen, wenn man von einer halben Anordnung nach Fig. 6 ausgeht, bei der also die untere Hälfte mit den Platten 2/3 und 1/1 fehlt, wenn man den gewissermaßen nach unten offenen Kasten durch eine Platte 6 schließt.

Bei der zweiten Transpositions-Variante nach Fig. 8 ist die Integration des dritten Bandleiterkondensators $C_3$ in eine Anordnung nach Fig. 6 dadurch realisiert, daß beiden Platten 2/3 (oder bei einer Anordnung mit festem Dielektrikum beide Beläge 2/3) auf ihren dem Hochspannungsschalter S abgewandten Enden verkürzt sind, um die Strecke x, so daß für die Platten 2/3 die Länge 1 — x verbleibt und auf der Verkürzungsstrecke x sich die Teilbeläge 5, 6 der Platten 4/5 und 1/6 direkt gegenüberliegen. Die Kapazität des dritten Bandleiterkondensators $C_3$ kann noch dadurch vergrößert werden, daß der Abstand zwischen den Teilbelägen 5 und 6 durch Belagverstärkung 60, so wie schematisch dargestellt, verringert ist. Die Teilkondensatoren der Bandleiterkondensatoren sind wieder mit $C'_1$, $C'_2$ und $C'_3$ bezeichnet.

Bei der dritten Transpositions-Variante zur Integration eines dritten Bandleiterkondensators $C_3$ nach Fig. 9 sind im Vergleich zu Fig. 6 die beiden Beläge 2/3 mit Durchbrüchen D in Form von Bohrungen, Aussparungen oder Schlitzen solcher Größe versehen, daß im Durchbrechungsbereich ein direkter Felddurchgriff vom Belag 1/6 zum Belag 4/5 durch die Durchbrüche D hindurch gegeben ist. Dabei ergibt sich, wie weiter unten noch näher erläutert, eine vorteilhafte Gestaltungsmöglichkeit für Anordnung und Bemessung dieser Durchbrüche : Man kann sie in ihrer Fläche so groß machen, daß sie zur Bildung des dritten Bandleiterkondensators $C_3$ beitragen, und man kann sie zusätzlich so ausbilden, daß sie mäandrierende oder schleifenförmige Strompfade innerhalb der Platten oder Beläge zur Ausbildung von Laufzeitketten ergeben, wobei beide Maßnahmen entweder in Kombination oder nur eine von ihnen getroffen werden können bzw. kann.

Die anhand der Fig. 7 bis 9 erläuterten grundsätzlichen vier Transpositions-Möglichkeiten zur Integration eines dritten Bandleiterkondensators können je für sich bzw. separat oder auch in Kombination, d. h. auch in Unterkombination, angewendet werden. Dabei können die Verkürzungs-, Durchbrechungs- oder Verstärkungs-Maßnahmen nicht nur symmetrisch, d. h. für beide Platten 2/3, in gleichem Umfang getroffen werden, sondern es ist auch eine asymmetrische Realisierung möglich.

Fig. 7 bis 9 in Verbindung mit Fig. 6 stellen bevorzugte ebene Anordnungen mit einem flüssigen Dielektrikum und Kondensatorplatten dar, wobei als Dielektrikum außer Wasser geringer Leitfähigkeit auch Glykol-Wasser-Mischungen bei variablen Temperaturen und unterschiedlichem Wasseranteil in Frage kommen ; ebenso eignen sich organische Flüssigkeiten aus der Gruppe der N-Alkylsäureamide. Zu Fig. 7 bis 9 sinngemäße Anordnungen lassen sich indessen auch mit festem Dielektrikum bzw. als Festkörper-Kondensatoranordnungen und entsprechenden Kondensatorbelägen realisieren, wie bereits angedeutet wurde.

Zum besseren Verständnis der weiteren Transpositions-Varianten zur Integration eines dritten Bandleiterkondensators unter Zugrundelegung einer dreidimensionalen Anordnung nach den Fig. 11 bis 15 sei zunächst auf die dreidimensionale Anordnung nach Fig. 10 eingegangen, welche einer Transposition der Blümlein-Schaltung nach Fig. 3 in einer räumlichen Anordnung entspricht und bereits in der DE-A-29 32 781 beschrieben und dort in Fig. 11 als kompakte Plattenanordnung mit flüssigem Dielektrikum dargestellt ist. Grundsätzlich ist die Erfindung indessen auch anwendbar auf Bandleiterkondensator-Anordnungen mit festem Dielektrikum und Kondensator-Belägen (Festkörperkondensatoren), wie sie z. B. in Fig. 2 und 3 der DE-A-29 32 781 dargestellt sind. Charakteristisch für die dreidimensionale Anordnung nach Fig. 10 ist, daß die ersten und zweiten Bandleiterkondensatoren $C_1$, $C_2$ mit ihren Platten 4/4, 2/3, 1/1 und ihren dazwischen liegenden dielektrischen Schichten d im wesentlichen normal zur optischen Achse o-o der Laserkammer LK verlaufen und im wesentlichen parallel zur optischen Achse der Laserkammer zu einem Kondensatorpaket CR* gestapelt und innerhalb des pulserzeugenden Netzwerkes PEN 3 angeschlossen sind. Aufgrund dieser Bauweise ergibt sich trotz einer sehr hohen zu realisierenden Gesamtkapazität eine relativ kleine Induktivität. Dem Teilstapel C' in Fig. 10 entspricht die gesamte in Fig. 6 dargestellte Kondensatoranordnung CE ; dem halben Teilstapel C'/2 in Fig. 10 entspricht CE/2 in Fig. 6. C'/2 bzw. CE/2 sind die kleinsten, noch funktionsfähigen Bandleiterkondensator-Anordnungen, welche alle Beläge bzw. Platten 1, 2, 3, 4 bzw. 1/1, 2/3, 4/4 einmal aufweisen. Die Kondensatorplatten bzw. -beläge sind in Fig. 10 sinngemäß zu Fig. 6 bezeichnet, ebenso die übrigen Schaltungselemente des Anregungskreises. Man gelangt von der Ausführung nach Fig. 6 zu derjenigen nach Fig. 10 im wesentlichen dadurch, daß man die Kondensatorplatten um eine quer zur optischen Achse o-o gedachte Drehachse um 90° dreht und dann die Teilstapelanzahl nach Bedarf vergrößert.

Die anhand der Fig. 6 bis 9 erläuterten Transpositions-Varianten sind sinngemäß auch anwendbar auf die dreidimensionale Anordnung nach Fig. 10, um auf diese Weise den dritten Bandleiterkondensator $C_3$ nach Fig. 4 bzw. 5C in das pulserzeugende Netzwerk zu integrieren. Zum besseren Verständnis sind trotzdem einige ausgewählte Transpositions-Varianten in Fig. 11 bis 15 dargestellt.

Für die Variante nach Fig. 11 gilt, daß zur Einfügung des dritten Bandleiterkondensators $C_3$ in das pulserzeugende Netzwerk PEN 3 nach Fig. 3 von den über die Stapellänge sich zyklisch wiederholenden Belägen 1/1 des ersten Bandleiterkondensators, 4/4 des zweiten Bandleiterkondensators und 2/3 des ersten und zweiten Bandleiterkondensators mindestens bei einem der alle Beläge einmal aufweisenden Kondensatorstapel C' und bei einem Plattenpaar (bzw. Belagpaar) 2/3, 2/3 zumindest eine Platte weggelassen ist. Auf diese Weise entsteht über der Laserkammer LK, d. h. zwischen den an die Laser-Elektroden $E_{L1}$ und $E_{L2}$ angeschlossenen Kondensatorplatten, welche ursprünglich mit 4/4 und 1/1 bezeichnet und jetzt mit 4/5 und 6 bezeichnet sind, der Teilkondensator $C'_3$. Der Wert des Kondensators $C_3$ des gesamten Stapels CR ergibt sich aus der Addition aller Teilkondensatoren $C'_3$, wenn die Maßnahme der Weglassung der Platte 2/3 nicht nur an einer, sondern mindestens an einer weiteren Stelle über die Länge des Kondensatorstapels CR gesehen getroffen wird. Der Kapazitätswert eines Teilkondensators $C'_3$ ist einstellbar durch den Abstand a3 und durch die kleinste der Flächen der Kondensatorplatten 6 und 4/5. Die Bezeichnung 4/5 soll besagen, daß diese Platte sowohl zum

Teilkondensator $C'_2$ als auch zum Teilkondensator $C'_3$ gehört, die Bezeichnung der zweiten Platte des Teilkondensators $C'_3$ mit 6 besagt, daß diese Platte zu dem in Fig. 4 bzw. 5C mit 6 bezeichneten Belag gehört. Die Gesamtkapazität $C_3$ kann dann durch Variation der Kapazitätswerte $C'_3$ und durch eine Variation der Anzahl der Teilstapel $C'$ des Kondensatorstapels CR, die einen Teilkondensator $C'_3$ enthalten, an die Erfordernisse der Schaltung angepaßt werden.

Fig. 12 zeigt eine Transpositions-Variante, bei der jeder Kondensatorteilstapel $C'$ einen dritten Bandleiter-Teilkondensator $C'_3$ enthält, was jedoch nicht notwendig für die Funktion der Schaltung nach Fig. 4 und 5C ist. Die nur dem Teilkondensator $C'_3$ zugeordneten Platten sind wieder mit 6 bezeichnet, die sowohl dem zweiten Teilkondensator $C'_2$ als auch dem dritten Teilkondensator $C'_3$ zugehörige Platte mit 4/5, die sowohl dem ersten als auch dem zweiten Teilkondensator $C'_1$, $C'_2$ zugehörige Platte mit 2/3 und die sowohl dem ersten Teilkondensator $C'_1$ als auch dem dritten Teilkondensator $C'_3$ zugehörige Platte mit 1/6. Den Gesamt-Kondensator $C'_1$ der ICT-Schaltung nach Fig. 4 und 5C bildet die Gesamtheit der Teilkondensatoren $C'_1$ mit den Platten 2/3 und 1/6, den Gesamt-Kondensator $C'_2$ die Gesamtheit der Teilkondensatoren $C'_2$ mit den Platten 4/5 und 2/3.

Als Schaltelemente für die dreidimensionalen Anordnungen nach Fig. 11 und 12 wie auch nach den noch zu erläuternden Fig. 13 bis 15 sowie 16A bis 19B eignen sich wieder Funkenstrecken und Thyratrons ; besondere Vorteile bietet jedoch die Ankopplung eines magnetischen Induktors an das in den Fig. 4 und 5C dargestellte pulserzeugende Netzwerk PEN 4.

Bei dem in Fig. 13 dargestellten weiteren Ausführungsbeispiel für die Einfügung oder Integration einer über der Entladungsstrecke der Laserkammer LK liegenden Kapazität $C_3$ in das pulserzeugende Netzwerk PEN 4 einer ICT-Schaltung weist der Teilstapel $C'$ wieder einen Teilkondensator $C'_1$ mit den Platten 2/3 und 1/1 und einen Teilkondensator $C'_2$ mit den Platten 4/4 und 2/3 auf. Hierbei sind einige oder alle Platten 2/3 jedoch mit Durchbrüchen D (Bohrungen, Aussparungen, Ausstanzungen, oder ähnlichem) versehen, welche die wirksame Fläche der Platten 2/3 vermindern und so die Kapazitätswerte für $C'_1$ und $C'_2$ bzw. $C_1$ und $C_2$ reduzieren. Es sind dann jedoch elektrische Feldkomponenten zwischen den Platten 4/5 und 1/6 vorhanden (in Fig. 13 schraffiert angedeutet), die durch die Platten 2/3 hindurchgreifen und zu kleinen Teilkapazitäten $C''_3$ parallel zur Entladungsstrecke LK führen. Diese setzen sich pro Teilstapel $C'$ zu Teilkondensatoren $C'_3$ zusammen, diese wieder je nach Häufigkeit der Anordnung im pulserzeugenden Netzwerk additiv zum Gesamtkondensator $C_3$.

Diese Ausführung hat den auch schon im Ausführungsbeispiel nach Fig. 9 gegebenen Vorteil, daß im Bedarfsfall alle Platten 2/3 im Stapelkondensator verbleiben können, und so die Anschlußinduktivität bezüglich der Laserkammer LK minimal bleibt. Ein weiterer Vorzug dieser Ausführung besteht darin, daß zur Vermeidung hoher Spitzenströme im Schaltelement S im Falle einer Impulsformung durch Laufzeitketten auch in dem den Schalter S enthaltenden Kreis bzw. der entsprechenden Masche eine solche Impulsformung sehr einfach kombiniert werden kann mit der Einführung eines. Kondensators $C_3$ über der Laserkammer LK. Dazu sind lediglich die dort erwähnten Teilfugen bzw. die in der DE-A-3 128 206 beschriebenen Einschnitte so breit oder tief auszuführen, daß diesen ein nennenswerter Anteil an der Gesamtfläche der Platten 2/3 zukommt und so der erwähnte Felddurchgriff von Platte 1/6 durch die Platten 2/3 zu den Platten 4/5 stattfindet.

Bei der in Fig. 14 dargestellten Variante zur Einfügung von $C_3$ sind einige oder alle Platten 2/3 kürzer ausgeführt, so daß bis zu einem wählbaren seitlichen Abstand von der Laserkammer LK sich nur noch die Teilplatten 5 der Platten 4/5 und 6 der Platten 1/6 gegenüberstehen und so einen Teilkondensator $C'_3$ entstehen lassen, dessen Wert sich nach den bekannten Gesetzen der Elektrotechnik aus der von Platte 2/3 nicht abgedeckten Fläche, dem Abstand a3 der Platten 1/6 und 4/5 voneinander sowie den verwendeten Dielektrika ergibt.

Bei der in Fig. 15 dargestellten Version wird die Ausführung nach Fig. 14 dadurch modifiziert, daß eine Erhöhung des Wertes von $C'_3$ bzw. $C_3$ durch partielles Verringern des Abstandes der Platten 1/6 und 4/5 ermöglicht wird (Annäherung der Teilplatten 5 und 6). Dies bewerkstelligen z. T. gestrichelt dargestellte Verdickungen an den Teilplatten 5 und 6, d. h. in den Flächenbereichen, die durch Kürzen der Platten 2/3 entstanden sind. Ist diese Erhöhung des Wertes von $C'_3$ bzw. $C_3$ nicht notwendig, so kann aufgrund der Belagverdickung bei vorgegebenem Wert für $C_3$ die Kürzung der Platten 2/3 geringer ausfallen und so einen größeren Wert für $C_1$ zulassen.

Auch die beiden letztgenannten Ausführungen nach Fig. 14 und 15 ermöglichen, alle Platten 2/3 im Stapel zu belassen zugunsten minimaler Anschlußinduktivität.

**Patentansprüche**

1. Angegungskreis für ein TE-Hochenergielasersystem, das mit Anregung durch möglichst homogene lichtbogenfreie Kondensatorentladung im Gasraum einer Laserkammer zwischen mindestens zwei, mit Abstand einander gegenüberliegenden Laser-Elektroden arbeitet ; dabei besteht das TE-Hochenergielasersystem aus

— den erwähnten Laser-Elektroden innerhalb der Laserkammer, welche jeweils parallel zur optischen Achse der Laserkammer sich erstrecken und bevorzugt einen in dieser Richtung ausgedehnten Vollquerschnitt aufweisen ;

0 130 443

— mindestens einem schnellen Hochspannungsschalter, durch dessen Aktivierung bzw. Zündung über ein pulserzeugendes Netzwerk Hochspannungsimpulse an den Laser-Elektroden erzeugbar sind ; und

— aus dem genannten pulserzeugenden Netzwerk mit dem Hochspannungsschalter und der Laserkammer zugeordneten ersten und zweiten Bandleiterkondensatoren ($C_1$, $C_2$) und mit zugehörigen Ersatzinduktivitäten ($L_1$, $L_2$) des Anregungskreises, die sich insbesondere aus der Eigeninduktivität des Hochspannungsschalters, der Laserkammer, der Zuleitungen und der Bandleiterkondensatoren ergeben, dadurch gekennzeichnet, daß das pulserzeugende Netzwerk (PEN 4) außer den ersten und zweiten Bandleiterkondensatoren ($C_1$, $C_2$) mindestens einen dritten Bandleiterkondensator ($C_3$) aufweist, der so in das pulserzeugende Netzwerk (PEN 4) eingefügt ist, daß er ($C'_3$) ausgehend von einem pulserzeugenden Netzwerk in Blümlein-Schaltung (PEN 3) in Parallelschaltung zur Entladungsstrecke der Laserkammer (LK) und zu einer mit dieser in Reihe liegenden Ersatzinduktivität ($L_2$) hinzugefügt ist oder daß er ($C_{30}$) ausgehend von einem pulserzeugenden Netzwerk in Charge-Transfer-Schaltung (PEN 2) durch den zweiten Bandleiterkondensator ($C_2$) des pulserzeugenden Netzwerkes (PEN 2) gebildet ist, wenn in Parallelschaltung zum Hochspannungsschalter (S) und zu einer mit diesem in Reihe liegenden Ersatzinduktivität ($L_1$) ein zusätzlicher Bandleiterkondensator ($C_{10}$) hinzugefügt ist, der in der neuen Schaltung die Funktion eines ersten Bandleiterkondensators übernimmt, wobei der ursprünglich erste Bandleiterkondensator ($C_1$) die Funktion eines zweiten Bandleiter-Kondensators ($C_{20}$) übernimmt.

2. Anregungskreis nach Anspruch 1, wobei ausgehend von einem pulserzeugenden Netzwerk (PEN 3) in Blümlein-Schaltung, in welches der dritte Bandleiterkondensator ($C_3$) eingefügt wird, dieses die folgenden Kondensator-Beläge ausweist :

— mindestens einen mit der einen Elektrode ($E_{L1}$) der Laserkammer (LK) verbundenen ersten Belag (4/4) des zweiten Bandleiterkondensators ($C_2$),

— mindestens je einen dem ersten Belag (4/4) zu beiden Seiten mit Abstand gegenüberliegenden, mit der einen Elektrode ($E_{S2}$) des Hochspannungsschalters (S) verbundenen kombinierten zweiten Belag (2/3) des ersten und zweiten Bandleiterkondensators ($C_1$, $C_2$) und

— mindestens je einen, den zweiten Belägen (2/3) mit Abstand gegenüberliegenden, sowohl mit der anderen Elektrode ($E_{S1}$) des Hochspannungsschalters (S) als auch mit der anderen Elektrode ($E_{L2}$) der Laserkammer (LK) verbundenen dritten Belag (1/1),

dadurch gekennzeichnet, daß zur Einfügung des dritten Bandleiterkondensators ($C_3$)

a) einer der beiden zweiten Beläge (2/3) weggelassen ist, so daß sich im Weglassungsbereich die ersten und dritten Beläge (4/5 ; 6) einander direkt gegenüberliegen, und/oder daß

b) einer oder beide zweite Beläge (2/3) auf seinem bzw. ihren dem Hochspannungsschalter (S) abgewandten Ende(n) verkürzt sind, so daß sich im Verkürzungsbereich die ersten und dritten Beläge (4/5 ; 1/6) einander direkt gegenüberlieden, und oder daß

c) einer oder beide zweite Beläge (2/3) mit Durchbrüchen (D) in Form von Bohrungen, Aussparungen oder Schlitzen solcher Größe versehen sind, daß im Durchbrechungsbereich ein direkter Felddurchgriff vom dritten Belag (1/6) zum ersten Belag (4/5) durch die Durchbrüche hindurchgegeben ist, und/oder daß

d) im Weglassungs Verkürzungs- oder Durchbrechungsbereich der Abstand zwischen den einander direkt gegenüberliegenden ersten und dritten Belägen (6 und 5) durch Belagverstärkung verringert und damit die Teilkapazität $C'_3$) vergrößert ist.

3. Anregungskreis nach Anspruch 1 oder 2 dadurch gekennzeichnet, daß die Bandleiterkondensatoren ($C_1$, $C_2$, $C_3$) mit ihren Belägen (4/4, 2/3, 1/1, 4/5, 1/6, 6) und ihren dazwischenliegenden dielektrischen Schichten (d) eine sogenannte ebene Anordnung bilden, bei welcher die Längserstreckung der Laserelektroden ($E_{L1}$, $E_{L2}$) und ihrer optischen Achse (o-o) in einer Belagebene oder planparallel zu einer Belagebene eines Bandleiterkondensators ($C_1$, $C_2$, $C_3$) verlaufen.

4. Anregungskreis nach Anspruch 1 oder 2, dadurch gekennzeichnet, daß die ersten und zweiten Bandleiterkondensatoren ($C_1$, $C_2$) mit ihren Belägen (4/4, 2/3, 1/1, 4/5, 1/6, 6) und ihren dazwischenliegenden dielektrischen Schichten (d) im wesentlichen normal zur optischen Achse (o-o) der Laserkammer (LK) verlaufen und im wesentlichen parallel zur optischen Achse der Laserkammer zu einem Kondensatorpaket gestapelt und innerhalb des pulsformenden Netzwerkes angeschlossen sind, wobei zur Einfügung eines dritten Bandleiterkondensators ($C_3$) in das pulserzeugende Netzwerk (PEN 2 bzw. PEN 3) von den über die Stapellänge sich zyklisch wiederholenden Belägen (1/1) des ersten Bandleiterkondensators (4/4), des zweiten Bandleiterkondensators und (2/3) der ersten und (2/3) des ersten und zweiten Bandleiterkondensators mindestens bei einem der alle Beläge einmal aufweisenden Kondensatorteilstapel (C') und bei einem Belagpaar (2/3, 2/3) zumindest ein Belag (2/3) weggelassen, verkürzt oder wenigstens in einem Teilbereich seiner Fläche durchbrochen ist.

5. Anregungskreis nach einem der Ansprüche 1 bis 4, dadurch gekennzeichnet, daß die den dritten Bandleiterkondensator ($C_3$) enthaltende räumliche Anordnung des pulsformenden Netzwerkes (PEN 4) mit seinen Bandleiterkondensatoren ($C_1$, $C_2$, $C_3$) ein flüssiges Dielektrikum aufweist und die Kondensatorbeläge (1/1, 2/3, 4/4, 4/5, 1/6, 6) als Kondensatorplatten ausgeführt sind.

6. Anregungskreis nach Anspruch 5, dadurch gekennzeichnet, daß als Dielektrikum Wasser geringer Leitfähigkeit, Glykol Wasser-Mischungen oder organische Flüssigkeiten aus der Gruppe der N-Alkylsäureamide verwendet sind.

9

7. Anregungskreis nach Anspruch 4, dadurch gekennzeichnet, daß über die Stapellänge des Kondensatorpaketes (CR) gesehen abwechselnd ein gemeinsamer Kondensatorbelag (2/3) entfernt bzw. nicht entfernt ist, und damit jeder Kondensatorteilstapel (C') eine dritte Bandleiter-Teilkapazität ($C'_3$) enthält.

8. Anregungskreis nach einem der Ansprüche 1 bis 7, dadurch gekennzeichnet, daß als Hochspannungsschalter (S) bei der Inversions-Charge-Transfer-Schaltung (PEN 4) ein sättigbarer magnetischer Induktor eingesetzt ist.

9. Anregungskreis nach Anspruch 2, wobei ein Teil der Kondensator-Beläge durch Schlitzung oder mittels Koppelspulen-Überbrückung von Belagspalten einen zum Schaltkreis des pulserzeugenden Netzwerkes zusätzlichen Induktivitätsbereich aufweist, dadurch gekennzeichnet, daß diese Maßnahme zur Bildung des zusätzlichen Induktivitäts-Belages am Belag (2/3) der ersten und zweiten Bandleiterkondensatoren ($C_1$, $C_2$) eines Kondensatorstapels (CE, CR) getroffen und so zur Bemessung der dritten Teilkapazität $C'_3$) mitbenutzt sind.

10. Anregungskreis nach einem der Ansprüche 1 bis 9, dadurch gekennzeichnet, daß die durch die Summe aus Eigen- und Anschlußinduktivität gegebene Ersatzinduktivität des dritten Bandleiterkondensators ($C_3$) einerseits und die der Reihenschaltung aus erstem und zweitem Bandleiterkondensator ($C_1$, $C_2$) andererseits jeweils klein gegenüber der Ersatzinduktivität ($L_2$) des die Laserkammer (LK) anthaltenden Anregungszweiges (K 2.3-K 4) ist.

11. Anregungskreis nach Anspruch 10, dadurch gekennzeichnet, daß die Ersatzinduktivitäten des dritten Bandleiterkondensators ($C_3$) und der Reihenschaltung aus dem ersten und zweiten Bandleiterkondensator ($C_1$-$C_2$) jeweils etwa um eine Größenordnung kleiner sind als die Ersatzinduktivität ($L_2$) des die Laserkammer (LK) enthaltenden Anregungszweiges (k 2.3-k4).

## Claims

1. An excitation circuit for a high energy TE laser system which operates by excitation using arc-free capacitor discharges which are as homogenous as possible between at least two laser electrodes spaced from one another in the gas space of a laser chamber ; in which the high energy TE laser system consists of :
— said laser electrodes within the laser chamber, which each extend parallel to the optical axis of the laser chamber and preferably have a solid cross-section expanding in this direction ;
— at least one rapid high voltage switch, by whose activation or ignition, as the case may be, high-voltage pulses can be produced at the laser electrodes *via* a pulse-generating network ; and
— said pulse-producing network having first and second strip conductor capacitors ($C_1$, $C_2$) assigned to the high-voltage switch and the laser chamber, and excitation inductances ($L_1$, $L_2$) of the excitation circuit which in particular result from the natural inductance of the high-voltage switch, the laser chamber, the supply lines and the strip conductor capacitors,
characterised in that in addition to the first and second strip conductor capacitors ($C_1$, $C_2$) the pulse-producing network (PEN 4) has a least a third strip conductor capacitor ($C_3$) inserted into the pulse-producing network (PEN 4) in such a manner that, commencing from a pulse-producing network in a Blümlein circuit (PEN 3) it ($C'_3$) is added in a parallel circuit to the discharge path of the laser chamber (LK) and to an equivalent inductance ($L_2$) connected in series thereto, or that commencing from a pulse-producing network in a charge-transfer-circuit (PEN 2) it ($C_{30}$) is formed by the second strip conductor capacitor ($C_2$) of the pulse-producing network (PEN 2) if an additional strip conductor capacitor ($C_{10}$) is added in a parallel connection to the high-voltage switch (S) and to an equivalent inductance ($L_1$) series-connected thereto, which strip conductor capacitor ($C_{10}$) adopts the function of a first strip conductor capacitor in the new circuit, whilst the original first strip conductor capacitor ($C_1$) takes over the function of a second strip conductor capacitor ($C_{20}$).

2. An excitation circuit as claimed in Claim 1, wherein commencing from a pulse-producing network (PEN 3) in a Blümlein circuit, into which the third strip conductor capacitor ($C_3$) is inserted, said network possesses the following capacitor coatings :
— at least one first coating (4/4) of the second strip conductor capacitor ($C_2$) which is connected to the one electrode ($E_{L1}$) of the laser chamber (LK) ;
— at least one combined second coating (2/3) of the first and second strip conductor capacitor ($C_1$, $C_2$) arranged opposite but spaced from the first coating (4/4) on each side and connected to the one electrode ($E_{S2}$) of the high-voltage switch (S) ; and
— at least a third coating (1/1) arranged opposite but spaced from the second coating (2/3) on each side and connected both to the other electrode ($E_{S1}$) of the high-voltage switch (S) and to the other electrode ($E_{L2}$) of the laser chamber (LK) ;
characterised in that in order to insert the third strip conductor capacitor ($C_3$) :
a) one of the two second coatings (2/3) is omitted, so that in the omission region the first and third coatings (4/5 ; 6) are directly opposite one another, and/or that
b) one or both second coatings (2/3) is or are shortened at that end (n) remote from the high-voltage switch (S), so that in the shortened region the first and third coating (4/5 ; 1/6) are directly opposite one another, and or that

c) one or both second coatings (2/3) is or are provided with openings (D), in the form of bores, recesses or slots, of such dimensions that in the region of these openings a direct field passage is formed from the third coating (1/6) to the first coating (4/5) through the openings and/or that

d) in the omission region, shortened region or the region of the openings the spacing between the directly opposed first and third coatings (6 and 5) is decreased by coating reinforcement to increase the partial capacitance $(C'_3)$.

3. An excitation circuit as claimed in Claim 1 or 2, characterised in that the strip conductor capacitors $(C_1, C_2, C_3)$ form a so-called planar arrangement by their coatings (4/4, 2/3, 1/1, 4/5, 1/6, 6) and their intermediate dielectric layers (d), in which planar arrangement the longitudinal extension of the laser electrodes $(E_{L1}, E_{L2})$ and their optical axis (o-o) extend in a coating plane or plane parallel to a coating plane of a strip conductor capacitor $(C_1, C_2, C_3)$.

4. An excitation circuit as claimed in Claim 1 or 2, characterised in that the first and second strip conductor capacitors $(C_1, C_2)$ extend normal to the optical axis (o-o) of the laser chamber (LK), stacked to form a capacitor pack parallel to the optical axis of the laser chamber, and are connected within the pulse-forming network, where in order to insert a third strip conductor capacitor $(C_3)$ into the pulse-producing network (PEN 2 or PEN 3 as the case may be) cyclically repeated over the length of the stack are the coatings (1/1) of the first strip conductor capacitor (4/4), of the second strip conductor capacitor and (2/3) of the first and (2/3) of the first and second strip conductor capacitor at least in one of the partial capacitor stacks (C') which comprises all coatings, and in one coating pair (2/3, 2/3), at least one coating (2/3) is omitted, shortened or provided with openings in a sub-zone of its surface.

5. An excitation circuit as claimed in one of Claims 1 to 4, characterised in that the spatial arrangement of the pulse-forming network (PEN 4), which comprises the third strip conductor capacitor $(C_3)$, together with its strip conductor capacitors $(C_1, C_2, C_3)$ has a liquid dielectric, and the capacitor coatings (1/1, 2/3, 4/4, 4/5, 1/6, 6) are designed as capacitor plates.

6. An excitation circuit as claimed in Claim 5, characterised in that as a dielectric, use is made of water having no significant conductivity, glycol water mixtures, or organic liquids consisting of N-alkyl acid amides.

7. An excitation circuit as claimed in one of Claim 4, characterised in that as viewed across the stack length of the capacitor pack (CR), a common capacitor coating (2/3) is alternately absent or present, so that each partial capacitor stack (C') comprises a third strip conductor partial capacitance $(C'_3)$.

8. An excitation circuit as claimed in one of Claims 1 to 7, characterised in that a saturable magnetic inductor is used as a high-voltage switch (S) in the inversion-charge-transfer circuit (PEN 4).

9. An excitation circuit as claimed in Claim 2, wherein part of the capacitor coatings has an inductance zone in addition to the circuit of the pulse-producing network, formed by slotting or by coupling coil bridging of coating gaps, characterised in that this measure is taken to form the additional inductance coating on the coating (2/3) of the first and second strip conductor capacitors $(C_1, C_2)$ of a capacitor stack (CE, CR) and thus determine the magnitude of the third partial capacitance $(C'_3)$.

10. An excitation circuit as claimed in one of Claims 1 to 9, characterised in that the equivalent inductance of the third strip conductor capacitor $(C_3)$, formed by the sum of real and distributed inductance, on the one hand and that of the series connection consisting of the first and the second strip conductor capacitor $(C_1, C_2)$ on the other hand, are respectively small in relation to the equivalent inductance $(L_2)$ of the excitation branch (K 2.3-K 4) comprising the laser chamber (LK).

11. An excitation circuit as claimed in Claim 10, characterised in that the equivalent inductance of the third strip conductor capacitor $(C_3)$ and of the series connection consisting of the first and the second strip conductor capacitor $(C_1, C_2)$ are respectively one magnitude smaller than the equivalent inductance $(L_2)$ of the excitation branch (k 2.3-k 4) comprising the laser chamber (LK).


**Revendications**

1. Circuit d'excitation pour un système laser TE à haute énergie, qui travaille avec une excitation réalisée au moyen d'une décharge d'un condensateur aussi homogène que possible et sans arc électrique dans l'espace contenant le gaz d'une cavité laser entre au moins deux électrodes laser distantes en vis-à-vis, le système laser TE à haute énergie étant constitué par :

— les électrodes laser mentionnées, qui sont disposées à l'intérieur de la cavité laser et qui s'étendent respectivement parallèlement à l'axe optique de cette cavité laser et possèdent de préférence une section transversale pleine allongée suivant cette direction,

— au moins un interrupteur à haute tension à déclenchement rapide, au moyen de l'activation ou de l'amorçage duquel des impulsions à haute tension peuvent être produites au niveau des électrodes laser par l'intermédiaire d'un réseau produisant des impulsions, et

— ledit réseau produisant des impulsions et comprenant un interrupteur à haute tension et des premier et second condensateurs $(C_1, C_2)$ formés par des conducteurs plats, associés à l'interrupteur à haute tension et à la cavité laser, et comportant des inductances équivalentes associées $(L_1, L_2)$ du circuit d'excitation, qui sont formées notamment à partir de l'inductance propre de l'interrupteur à haute

11

tension, de la cavité laser, des lignes d'alimentation et des condensateurs constitués par des conducteurs plats,

caractérisé en ce que le réseau (PEN 4) produisant des impulsions comporte, en dehors des premier et second condensateurs ($C_1$, $C_2$) constitués par des conducteurs plats, au moins un troisième condensateur ($C_3$) constitué par des conducteurs plats et qui est inséré dans le réseau (PEN 4) produisant des impulsions de telle sorte qu'à partir d'un réseau produisant des impulsions, branché selon un montage Blümlein (PEN 3), il ($C'_3$) est branché en parallèle avec la voie de décharge de la cavité laser (LK) et avec une inductance équivalente ($L_2$) branchée en série avec cette voie de décharge, ou qu'à partir d'un réseau produisant des impulsions, réalisé selon un circuit à transfert de charges (PEN 2), il ($C_{30}$) est formé par le second condensateur ($C_2$) constitué par des conducteurs plats, du réseau (PEN 2) produisant des impulsions, lorsqu'en parallèle avec l'interrupteur à haute tension (S) et avec cette inductance équivalente ($L_1$), branchée en série avec cet interrupteur, se trouve monté en supplément un condensateur supplémentaire ($C_{10}$) constitué par des conducteurs plats et qui assume, dans le nouveau circuit, la fonction d'un premier condensateur constitué de conducteurs plats, auquel cas le premier condensateur initial ($C_1$) constitué par des conducteurs plats assume le rôle du second condensateur ($C_2$) formé par des conducteurs plats.

2. Circuit d'excitation suivant la revendication 1, dans lequel à partir d'un réseau (PEN 3) produisant des impulsions et réalisé selon un circuit Blümlein, dans lequel le troisième condensateur ($C_3$) constitué par des conducteurs plats est inséré, ce réseau comporte les armatures successives de condensateurs :

— au moins une première armature (4/4), reliée à une électrode ($E_{L1}$) de la cavité laser (LK), du second condensateur ($C_2$) constitué par des conducteurs plats,

— au moins une seconde armature respective (2/3), située en vis-à-vis et à distance de la première armature (4/4) des deux côtés et reliée à une électrode ($E_{S2}$) de l'interrupteur à haute tension (S), du premier et du second condensateurs ($C_1$, $C_2$) constitués par des conducteurs plats, et

— au moins une troisième armature respective (1/1) située en vis-à-vis et à distance des secondes armatures (2/3) et reliée aussi bien à l'autre électrode ($E_S$) de l'interrupteur à haute tension (S) qu'à l'autre électrode ($E_{L2}$) de la cavité laser (LK), caractérisé par le fait que pour l'insertion du troisième condensateur ($C_3$) constitué par les conducteurs plats

a) l'une des deux secondes armatures (2/3) est supprimée de sorte que les première et troisième armatures (4/5 ; 6) sont mutuellement situées directement en vis-à-vis dans la zone de suppression, et/ou

b) que l'une des secondes armatures (2/3) ou ces deux armatures sont raccourcies au niveau de son (leurs) extrémité(s) tournée(s) à l'opposé de l'interrupteur à haute tension (S) de sorte que, dans la zone de raccourcissement, les première et troisième armatures (4/5 ; 1/6) sont disposées mutuellement directement en vis-à-vis et/ou que

c) l'une des secondes armatures (2/3) ou ces deux armatures sont réunies par des passages (D) réalisés sous la forme de perçages, d'évidements ou de fentes possédant des dimensions telles que dans la zone d'interruption, il se produit un accès direct du champ depuis la troisième armature (1/6) en direction de la première armature (4/5) à travers les passages, et/ou

d) que, dans la zone de suppression, de raccourcissement ou d'interruption, la distance entre les première et troisième armatures (6 et 5) qui sont directement situées mutuellement en vis-à-vis, est réduite par renforcement de l'armature et que de ce fait la capacité partielle ($C'_3$) est accrue.

3. Circuit d'excitation selon la revendication 1 ou 2, caractérisé en ce que les condensateurs ($C_1$, $C_2$, $C_3$) constitués par des condensateurs plats forment, au moyen de leurs armatures (4/4, 2/3, 1/1, 4/5, 1/6, 6) et de leurs couches diélectriques intercalaires (d), ce qu'on appelle un dispositif plan, dans lequel l'étendue longitudinale des électrodes laser ($E_{L1}$, $E_{L2}$) et de leur axe optique (o-o) se situe dans un plan d'armature ou parallèlement à un plan d'armature d'un condensateur ($C_1$, $C_2$, $C_3$) constitué par des conducteurs plats.

4. Circuit d'excitation selon la revendication 1 ou 2, caractérisé par le fait que les premier et second condensateurs ($C_1$, $C_2$) constitués par des conducteurs plats s'étendent, par leurs armatures (4/4, 2/3, 1/1, 4/5, 1/6, 6) et leurs couches électriques (d) intercalaires, essentiellement perpendiculairement à l'axe optique (o-o) de la cavité laser (LK) et sont empilés essentiellement parallèlement à l'axe optique de la cavité laser de manière à former un paquet de condensateurs et sont raccordés à l'intérieur du réseau de formation d'impulsions, auquel cas pour l'insertion d'un troisième condensateur ($C_3$) constitué par des conducteurs plats dans le réseau (PEN 2 ou PEN 3) produisant des impulsions, au moins une armature (2/3) est supprimée, raccourcie ou perforée au moins dans une zone partielle de sa surface, parmi les armatures (1/1), qui se répètent cycliquement sur la longueur de la pile, du premier condensateur constitué par des conducteurs plats, les armatures (4/4), qui se répètent cycliquement sur la longueur de la pile, du second condensateur constitué par des condensateurs plats, et les armatures (2/3), qui se répètent cycliquement sur la longueur de la pile, du premier condensateur constitué par des conducteurs plats et les armatures (2/3), qui se répètent cycliquement sur la longueur de la pile, des premier et second condensateurs constitués par des conducteurs plats, au moins dans le cas d'une pile partielle de condensateurs (C'), comportant une fois toutes les armatures et dans le cas d'un couple (2/3, 2/3) d'armatures.

5. Circuit d'excitation suivant l'une des revendications 1 à 4, caractérisé par le fait que l'agencement spatial, qui contient le troisième condensateur (C₃) formé par des conducteurs plats, du réseau (PEN 4) délivrant des impulsions et muni de ses condensateurs (C₁, C₂, C₃) formés de conducteurs plats, comporte un diélectrique liquide et que les armatures (1/1, 2/3, 4/4, 4/5, 1/6, 6) des condensateurs sont réalisées sous la forme de plaques de condensateurs.

6. Circuit d'excitation suivant la revendication 5, caractérisé par le fait qu'on utilise comme diélectrique, de l'eau possédant une faible conductibilité, des mélanges glycol-eau ou des liquides organiques tirés du groupe des amides du N-alcoylacide.

7. Circuit d'excitation selon la revendication 4, caractérisé en ce que lorsque l'on regarde sur la longueur de la pile du paquet de condensateurs (CR), une armature commune (2/3) des condensateurs est en alternance retirée ou non retirée, et par conséquent chaque pile partielle de condensateurs (C') contient une troisième capacité partielle (C'₃) constituée par des conducteurs plats.

8. Circuit d'excitation suivant l'une des revendications 1 à 7, caractérisé par le fait qu'on utilise comme interrupteur à haute tension (S), dans le cas d'un circuit à transfert de charges d'inversion (PEN 4), une inductance magnétique saturable.

9. Circuit d'excitation suivant la revendication 2, dans lequel une partie des armatures des condensateurs comporte, par aménagement de fentes ou au moyen d'un shuntage de fentes entre armatures par des bobines de couplage, une zone d'inductance s'ajoutant en supplément au circuit de commutation du réseau produisant les impulsions, caractérisé par le fait que ces dispositions servent à former l'armature supplémentaire inductive au niveau de l'armature (2/3) des premier et second condensateurs (C₁, C₂) constitués par des conducteurs plats, d'une pile de condensateur (CE, CR) et sont ainsi utilisés conjointement pour dimensionner la troisième capacité partielle (C'₃).

10. Circuit d'excitation suivant l'une des revendications 1 à 9, caractérisé par le fait que l'inductance équivalente, constituée par la somme de l'inductance propre et de l'inductance de raccordement, du troisième condensateur (C₃) constitué par des conducteurs plats d'une part et de l'inductance du circuit série formé par les premier et second condensateurs (C₁, C₂) constitués par des conducteurs plats d'autre part est respectivement faible par rapport à l'inductance équivalente (L₂) de la branche d'excitation (K 2.3-K 4) contenant la cavité laser (LK).

11. Circuit d'excitation suivant la revendication 10, caractérisé par le fait que les inductances équivalentes du troisième condensateur (C₃) constitué par des conducteurs plats et du circuit série formé par les premier et second condensateurs (C₁, C₂) constitués par des conducteurs plats sont respectivement inférieures, d'environ un ordre de grandeur, à l'inductance équivalente (L₂) de la branche d'excitation (k 2.3-k 4), contenant la cavité laser (LK).

**0 130 443**

FIG 1

FIG 2

FIG 3

FIG 4

PEN 1

PEN 2

PEN 3

PEN 4

1

FIG 5

FIG 6

2

FIG 7

FIG 8

FIG 9

FIG 10

FIG 11

4

FIG 12

FIG 13

FIG 14

FIG 15